# EUROPEAN PATENT APPLICATION

(11) **EP 3 187 571 A1**
(43) Date of publication of application: **05.07.2017**
(21) Application number: 16205370.6
(22) Date of filing: 20.12.2016
(51) Int. Cl.: C10L 1/20, F23Q 2/42, B65B 31/00, B65D 83/14

(54) **FIRE-LIGHTER SPRAY CAN**

(30) Priority: 21.12.2015 IT UB20159385
(71) Applicant: Marhvel S.r.l., 20083 Vigano di Gaggiano (IT)
(72) Inventor: RAFFAGHELLO, Sergio, I-20083 Bonirola di Gaggiano (MI) (IT)
(74) Representative: Castiglia, Paolo

(57) **Abstract**

The invention relates to a fire-lighter spray can (20) comprising a mixture of an inflammable liquid product and a non-inflammable propellant, wherein said non-inflammable propellant comprises carbon dioxide and, optionally, at least one hydrofluoroolefin, preferably HFO-1234ze.

## Description

The present invention relates to a fire-lighter spray can.

In the present description and in the following claims, the expression "fire-lighter" is used to indicate the capability to light a fire in a cooking/heating location through solid combustible materials like for example wood, coal, charcoal, pellets and the like. The cooking/heating location can be an oven, a barbecue, a fireplace, a pellet-fired stove, etc..

In the field inflammable liquid products are known that are used to facilitate the lighting of the fire on solid combustible materials. Hereinafter, they are also called "fire-lighter liquids".

Such fire-lighter liquids are generally used by pouring an intended necessary quantity thereof onto the wood, coal, charcoal, pellets or other solid combustible material that is wished to be lit and are then brought into contact with a flame. In this way, the fire-lighter liquid catches fire allowing the solid combustible material on which it has been poured to also easily catch fire.

The fire-lighter liquids are typically available on the market in bottles or other containers at atmospheric pressure. They are provided with an outlet hole through which it is possible to pour the fire-lighter liquid onto the solid combustible material to be lit.

The Applicant has found that the use of such bottles and/or containers involves a series of drawbacks, the first one being the difficulty of evenly distributing the fire-lighter liquid over the entire area where the solid combustible material to be lit is placed. Indeed, often fire-lighter liquid is poured in an excessive quantity in some areas, whereas in other areas the solid combustible material is not even wet by the fire-lighter liquid. Therefore, there is both a waste of fire-lighter liquid and an uneven distribution of the fire-lighter liquid over the entire area where the solid combustible material is placed.

US 2009/0214994 A1 discloses a device for lighting a fire on a solid combustible material such as wood or charcoal, which in practice consists of a spray can containing an inflammable fluid (gas or liquid) that is placed under pressure by a propellant gas. Combustible gases are used as propellant gas (as indicated in paragraph [0018] of the aforementioned document). The delivery of the mixture of inflammable fluid and propellant gas takes place through a spray tube having a predetermined length.

The Applicant has found that the device made according to US 2009/0214994 A1, containing, in addition to an inflammable liquid, also an inflammable propellant gas, in any case remains subject to the risk known in the jargon as "backfire", a risk that is limited but not cancelled out by the provision of the spray tube.

US 4261700 discloses an aerosol product suitable for lighting the fire. Such a product comprises a gel composition contained in a container and delivered by said container in a gel form.

The Applicant observes that the gel composition is presented in the aforementioned document as suitable for allowing a series of drawbacks caused by the use of liquid fuels to be overcome.

The technical problem at the basis of the present invention is to provide a fire-lighter spray can that makes it possible to drastically reduce the risk of backfire and that at the same time ensures easy and homogeneous distribution of the inflammable liquid product over the area where the solid combustible material to be lit is placed.

The present invention therefore relates to a fire-lighter spray can characterised in that it comprises a mixture of an inflammable liquid product and of a non-inflammable propellant, in which said non-inflammable propellant comprises carbon dioxide.

Advantageously, the use of carbon dioxide instead of the inflammable propellants (like for example propane, butane or isobutane) typically used in the field of spray cans, gives the spray can according to the invention the desired safety with regard to backfire, also upon an improper use by the operator.

The structure of the spray can according to the invention is moreover simplified with respect to the device made according to US 2009/0214994 A1, since thanks to the reduced risk of backfire there is no need to use the spray tube.

The Applicant has observed that the use of carbon dioxide in spray cans is currently limited to the field of technical products such as cutting oils, bolt unscrewers, workshop greases, etc.. This is due to the fact that carbon dioxide produces a poor quality of the spray.

Where a higher quality spray is required, it is known to use as propellants inflammable substances, such as propane, butane, isobutane, etc..

The Applicant considers that the solution proposed differs in a non-obvious manner from that disclosed in US 4261700 in that it uses a liquid product, unlike the teachings of US 4261700 that would lead those skilled in the art to use a gel composition.

Basically, in the fire-lighter spray can according to the invention the inflammable liquid product is sprayed in aerosol form.

Throughout the present description and in the following claims, the terms "aerosolize", "aerosolization", "aerosolized", "aerosol" and the like are used to indicate the creation and delivery of a mixture of microparticles of a liquid product dispersed in air, i.e. a dispersion in air of microparticles of inflammable liquid product.

The spray of inflammable liquid product in aerosol form can be directed precisely where considered necessary. In particular, it is possible to spray many inflammable liquid products in the areas where the greatest amount of solid combustible material to be lit is present and less inflammable liquid product in the areas where a smaller amount of solid combustible material to be lit is present. In this way, excessive doses and wastage of inflammable liquid product are avoided.

Preferably, the carbon dioxide is in a percentage between about 0.5% and about 1.5% of the weight of the mixture, the extreme values being included.

More preferably, the carbon dioxide is in the percentage of about 1 % of the weight of the mixture.

In an embodiment of the container according to the present invention, said propellant also comprises at least one hydrofluoroolefin.

The Applicant has observed that in order to obtain a homogeneous distribution of the inflammable liquid product over the area where the solid combustible material to be lit is placed it is advisable to have a good quality spray and realized that it is possible to achieve this result, without jeopardising the non-inflammability of the propellant and the safety of the user, by also using a hydrofluoroolefin together with the carbon dioxide. Such a hydrofluoroolefin is moreover capable of increasing the amount of carbon dioxide held by the inflammable liquid product in its liquid phase, thus obtaining a better quality spray.

Preferably, said at least one hydrofluoroolefin comprises HFO-1234ze.

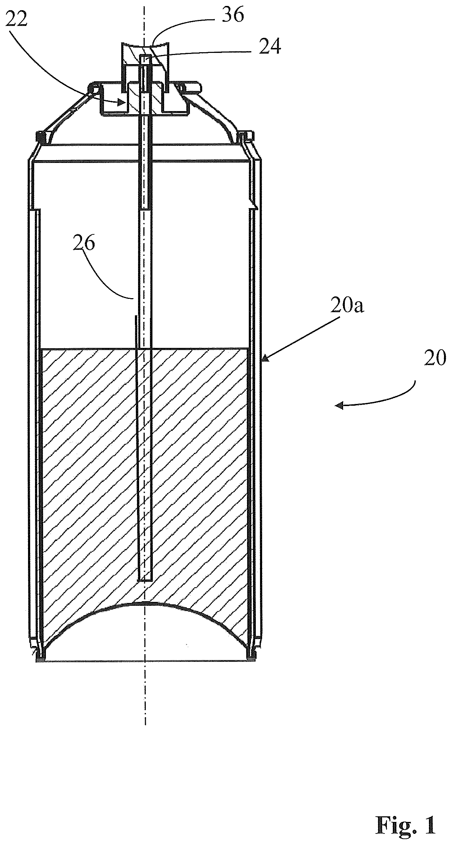

Further characteristics and advantages of the present invention will become clearer from the following detailed description of a preferred embodiment thereof, made with reference to figure 1 attached hereto and given for indicating and not limiting purposes.

Figure 1 schematically shows a longitudinal section of a fire-lighter spray can according to the present invention.
The spray can is indicated with 20. It is totally identical to a conventional spray can and differs from the latter only for the mixture contained and for the use that is made thereof.

The spray can 20 comprises a casing 20a that is preferably made of metallic material, for example carbon steel, tin plate or aluminium.

Inside the casing 20a there is a mixture of an inflammable liquid product and a non-inflammable propellant.

The spray can 20 is provided with a mixing valve 22 that is fluid-dynamically and mechanically coupled with a dispensing nozzle 24. The latter is in fluid communication with the mixture of the inflammable liquid product and of the non-inflammable propellant through a drawing tube 26.

The mixing valve 22 can be actuated by pressing a button 36 arranged on the top thereof. By releasing the button 36, on which a return spring acts (not shown for the sake of simplicity), the mixing valve 22 closes.

The can 20 is generally of the disposable type, i.e. it is discarded as waste after the inflammable liquid product contained therein has entirely run out.

The inflammable liquid product can for example be paraffin, petroleum or mixtures thereof.

The propellant is a liquid consisting of at least one liquefied gas. The liquid propellant allows the inflammable liquid product to be diffused in aerosol form.

In accordance with the present invention, the propellant is of the non-inflammable type.

In particular, the propellant comprises carbon dioxide (CO₂).

CO₂ is in a percentage comprised between about 0.5% and about 1.5% of the weight of the mixture, preferably equal to about 1% of the weight of the mixture.

In an embodiment, the propellant also comprises a hydrofluoroolefin, preferably HFO-1234ze (trans-1,3,3,3-Tetrafluoropropene).

In use, the inflammable liquid product is sprayed through the can 20 in aerosol form onto the area where the solid combustible material to be lit is placed.

The aerosolization of the inflammable liquid product through the effect of the propellant takes place because of the pressure exerted by the user on the aforementioned mixing valve 22 through the button 36. Following such pressure, the liquid propellant goes back into a gaseous phase and tends to come out violently from the delivery nozzle 24, also carrying out the inflammable liquid product which it was mixed with. The gaseous part of the mixture dissolves in the air separating from the liquid part, thus creating the aerosolization of the inflammable liquid product.

After delivery, the user lights the solid combustible material through a flame produced by a match or a lighter.

Of course, those skilled in the art can bring numerous modifications and variants to the invention described above, in order to satisfy specific and contingent requirements, all of which are in any case covered by the scope of protection of the present invention as defined by the following claims.

## Claims

1. Fire-lighter spray can (20), **characterized in that** it comprises a mixture of a inflammable liquid product and of a non-inflammable propellant, wherein said non-inflammable propellant comprises carbon dioxide.

2. Spray can (20) according to claim 1, wherein the carbon dioxide is in a percentage comprised between about 0.5% and about 1.5% of the weight of the mixture, the extreme values being included.

3. Spray can (20) according to claim 2, wherein the carbon dioxide is in the percentage of about 1 % of the weight of the mixture.

4. Spray can (20) according to any one of the previous claims, wherein said non-inflammable propellant further comprises at least one hydrofluoroolefin.

5. Spray can (20) according to claim 4, wherein said at least one hydrofluoroolefin comprises HFO-1234ze.
